(19) Europäisches Patentamt
European Patent Office
Office européen des brevets

(11) EP 3 367 258 A1

(12) EUROPEAN PATENT APPLICATION
published in accordance with Art. 153(4) EPC

(43) Date of publication:
**29.08.2018 Bulletin 2018/35**

(21) Application number: **16856598.4**

(22) Date of filing: **16.05.2016**

(51) Int Cl.:
***G06F 17/30*** *(2006.01)*

(86) International application number:
**PCT/CN2016/082203**

(87) International publication number:
**WO 2017/067156 (27.04.2017 Gazette 2017/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.10.2015 CN 201510688392**

(71) Applicant: **Guangzhou Kugou Computer Technology Co., Ltd.**
**Guangzhou, Guangdong 510665 (CN)**

(72) Inventors:
- **ZHANG, Long**
  **Shenzhen**
  **Guangdong 518000 (CN)**
- **LI, Shenyuan**
  **Shenzhen**
  **Guangdong 518000 (CN)**

(74) Representative: **Cabinet Beau de Loménie**
**158, rue de l'Université**
**75340 Paris Cedex 07 (FR)**

# (54) PLAYLIST LIST DETERMINING METHOD, DEVICE, ELECTRONIC DEVICE AND STORAGE MEDIUM

(57) Provided are a playlist list determining method, a device, an electronic device and a storage medium, the method comprising: determining the features data of the musical features of a preselected playlist, and the features data of the preferred musical features of a target user, there being a correspondence between the musical features of the preselected playlist and the preferred musical features of the target user; calculating a correlation coefficient between the features data of the musical features of the preselected playlist and the features data of the musical features corresponding to the preferences of the target user; and when the correlation coefficient between the features data of the of the musical features of the preselected playlist and the features data of the musical features corresponding to the preferences of the target user satisfies a preset condition, determining the preset playlist as a candidate playlist.

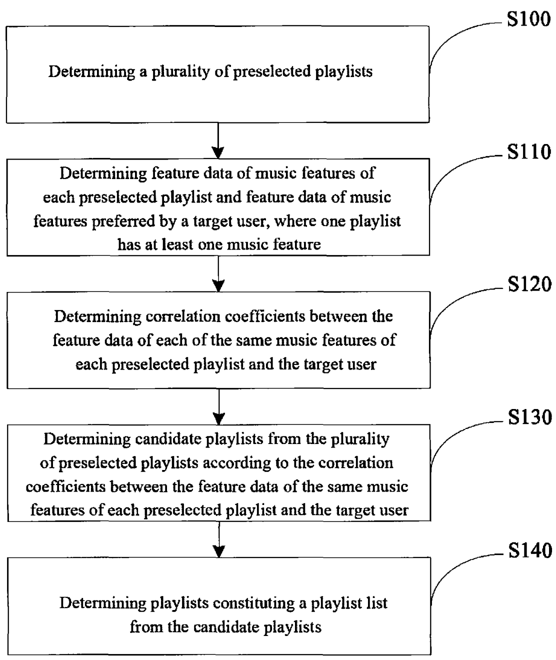


EP 3 367 258 A1

## Description

The present application claims priority to Chinese Patent Application No. 201510688392.X, filed with the Chinese Patent Office on 21 October 2015, and entitled "PLAYLIST LIST DETERMINATION METHOD AND DEVICE, ELECTRONIC EQUIPMENT, AND STORAGE MEDIUM", which is incorporated herein by reference in its entirety.

## FIELD OF THE INVENTION

The present invention relates to the technical field of playlist data processing, and in particular, to a playlist list determination method and device, an electronic equipment, and a storage medium.

## BACKGROUND OF THE INVENTION

A playlist list is a set of the playlist recommended to a user by a music player application. A playlist may be a set of multiple songs. The music player application, such as a webpage providing a music playing service, a client installed on a user terminal for providing the music playing service, and so on.

At present, a playlist list determination approach mainly includes: selecting, according to a type of a playlist list, playlists with types thereof corresponding to the type of the playlist list from a playlist library, and gathering the selected playlists into the playlist list, for example, if the type of a playlist list is "hot", then hot playlists can be selected from the playlist library, and the selected hot playlists are gathered into the playlist list to form a playlist list having the hot playlists.

## SUMMARY OF THE INVENTION

Embodiments of the present invention provide a playlist list determination method and device, an electronic equipment, and a storage medium, so that playlists in a playlist list have a relatively high correlation with a user to who a recommendation is made, thereby providing the probability of improving the listening conversion rate of the playlist list.

To achieve the purpose above, an embodiment of the present application provides the following technical solution:
A playlist list determination method, comprising:

determining feature data of music features included in preselected playlists and feature data of music features preferred by a target user, where the music features included in the preselected playlists correspond to the music features preferred by the target user;
calculating correlation coefficients between the feature data of the music features included in the preselected playlists and the feature data of the corresponding music features preferred by the target user; and
determining the preselected playlists to be candidate playlists when the correlation coefficients between the feature data of the music features included in the preselected playlists and the feature data of the corresponding music features preferred by the target user satisfy a preset condition.

There further provides in an embodiment of the present invention a playlist list determination device, comprising one or more processors, and a storage medium in which operating instructions are stored; when the operating instructions in the storage medium are run, the processor executes the following steps:

determining feature data of music features included in preselected playlists and feature data of music features preferred by a target user, where the music features included in the preselected playlists correspond to the music features preferred by the target user;
calculating correlation coefficients between the feature data of the music features included in the preselected playlists and the feature data of corresponding music features preferred by the target user; and
determining the preselected playlists to be candidate playlists when the correlation coefficients between the feature data of the music features included in the preselected playlists and the feature data of the corresponding music features preferred by the target user satisfy a preset condition.

There further provides in an embodiment of the present application an electronic equipment, comprising the playlist list determination device mentioned above.

There further provides in an embodiment of the present application a non-transitory computer readable storage medium storing computer executable instructions, when running executable instructions in a computer, the following steps are executed:

determining feature data of music features included in preselected playlists and feature data of music features preferred by a target user, where the music features included in the preselected playlists correspond to the music features preferred by the target user;
calculating correlation coefficients between the feature data of the music features included in the preselected playlists and the feature data of corresponding music features preferred by the target user; and
determining the preselected playlists to be candidate playlists when the correlation coefficients between the feature data of the music features included in the preselected playlists and the feature data of the corresponding music features preferred by the target user satisfy a preset condition.

Based on the technical solutions above, the probability that the target user prefers the playlists in the playlist list is enhanced, so that the probability that the target user clicks and listens to the playlist list determined by the embodiments of the present application, after being recommended to the target user, is enhanced, thereby providing a probability of improving the listening conversion rate of the playlist list. The playlist list determination method provided by the embodiments of the present application can make playlists in a playlist list have a relatively high correlation with a user to which a recommendation is made, thereby providing the probability of improving the listening conversion rate of the playlist list.

## BRIEF DESCRIPTION OF THE DRAWINGS

Fig. 1 is a flow chart of a playlist list determination method provided by an embodiment of the present application;
Fig. 2 is a flow chart of a method for determining candidate playlists from a plurality of preselected playlists provided by an embodiment of the present application;
Fig. 3 is a flow chart of a method for judging whether a preselected playlist is candidate playlists on the basis of music portrait data provided by an embodiment of the present application;
Fig. 4 is a flow chart of a method for determining playlists constituting a playlist list from candidate playlists provided by an embodiment of the present application;
Fig. 5 is a schematic diagram of sub-graphs of associations between playlists and a user;
Fig. 6 is another flow chart of a playlist list determination method provided by an embodiment of the present application;
Fig. 7 is a block diagram of a structure of a playlist list determination device provided by an embodiment of the present application;
Fig. 8 is a block diagram of a structure of a correlation coefficient determination module provided by an embodiment of the present application;
Fig. 9 is a block diagram of a structure of a candidate playlist determination module provided by an embodiment of the present application;
Fig. 10 is a block diagram of a structure of a judgment determination unit provided by an embodiment of the present application;
Fig. 11 is a block diagram of a structure of a playlist list determination module provided by an embodiment of the present application;
Fig. 12 is a block diagram of another structure of a playlist list determination device provided by an embodiment of the present application; and
Fig. 13 is a block diagram of a hardware structure of an electronic equipment provided by an embodiment of the present application.

## DETAILED DESCRIPTION OF THE EMBODIMENTS

The technical solutions in embodiments of the present application are clearly and fully described below with reference to the accompanying drawings in the embodiments of the present application. Apparently, the described embodiments are merely some of the embodiments of the present application, but not all the embodiments. Based on the embodiments of the present application, all other embodiments obtained by a person of ordinary skill in the art without involving an inventive effort shall fall within the scope of protection of the present application.

Fig. 1 is a flow chart of a playlist list determination method provided by an embodiment of the present application. The method can be applied to an electronic equipment, such as a server providing a music playing service, an equipment having data processing capability on the user side, or the like. Referring to Fig. 1, the method may include steps S100 to S140.

In step S100, a plurality of preselected playlists are determined.

Optionally, the plurality of preselected playlists may be selected from a playlist library.

If playlist data of the playlist library mainly comes from User Generated Content (UGC) data, in order for a relatively good quality of a playlist list subsequently recommended to a user, a certain selection rule can be set in the embodiments of the present application to select a plurality of preselected playlists that meet the selection rule from the playlist library.

For example, the selection rule may include: a playlist name conforms to a predetermined playlist name writing rule, playlist description content conforms to a predetermined playlist description content writing rule, song-related number data in the playlist conforms to a predetermined number requirement, and song-related listening data in the playlist conforms to a predetermined listening requirement, etc.

In step S110, feature data of music features of each preselected playlist and feature data of music features preferred by a target user are determined.

Optionally, the music features may be considered as types of music attributes of the playlist. The types of the music attributes may include singers, songs, genres, decades, languages, melodies, and the like of the playlist. In the embodiments of the present application, the type of at least one music attribute of the playlist can be preset as the music feature of the playlist, so that at least one music feature is preset. For example, one or more of the types of the music attributes, such as the singers, songs, genres, decades, languages, and melodies of the playlist, can be selected as the music features of the playlist.

Optionally, a singer feature of the playlist may take a singer number set of songs in the playlist as a feature vector. For example, if a playlist includes two songs of a singer A, one song of a singer B, and two songs of a singer C, then the singer features of the playlist are (singer A, 2), (singer B, 1), and (singer C, 2).

Optionally, genres of songs, which have the largest number in the playlist, can be selected as the genre of the playlist. Alternatively, the genre feature of the playlist may take the number of songs in each genre of the playlist as a feature vector. Other music features in the playlist, such as decades, languages, and melodies, may also be determined according to the method above.

Optionally, the music features of the playlist may include information of the songs, such as the genres, languages, decades, play amounts, and the like.

After at least one music feature of the playlist is determined, for each preselected playlist, the feature data of each music feature of the preselected playlist may be determined by the embodiments of the present application, and the feature data of the music feature may be considered as a value representative of the music feature.

For example, for each music feature in the preselected playlist, related data of the music feature can be abstracted to a music feature vector in the embodiments of the present application, and the value of the music feature vector of the music feature is calculated to obtain a feature value of the music feature vector of the music feature. The feature value of the music feature may be considered as the feature data of the music feature. The feature data of each music feature in each preselected playlist can be determined by determining the feature value of each music feature in each preselected playlist.

For example, if the music features of the playlists are a singer feature, a song feature, and a genre feature, then the related data of the singer feature of each preselected playlist may be abstracted to a singer feature vector, the related data of the song feature may be abstracted to a song feature vector, and the related data of the genre feature may be abstracted to a genre feature vector, so as to obtain a feature value of the singer feature vector, a feature value of the song feature, and a feature value of the genre feature value of each preselected playlist, thereby determining a feature data of the singer feature, a feature data of the song feature, and a feature data of the genre feature of each preselected playlist.

The target user is a user to which the playlist list is recommended. The music features preferred by the target user correspond to the music features of the playlists set in the embodiments of the present application. For example, when the music features of the playlists include the singer feature, the song feature, and the genre feature, the music features preferred by the target user also include the singer feature, the song feature, and the genre feature.

Optionally, the target user may define the specific content of the preferred music features, and calculate the feature value of the specific content of each music feature preferred by the target user, so that the feature data of each music feature preferred by the target user can be obtained.

Optionally, the music features preferred by the target user can also be obtained by analyzing historical data of music listened by the target user in the embodiments of the present application.

**In** step S120, correlation coefficients between the feature data of each of the same music features of each preselected playlist and the target user are determined.

After the feature data of the music features of each preselected playlist and the feature data of the music features preferred by the target user are determined, for the same music features of the preselected playlist and the target user, the correlation coefficients between the feature data of the same music features of the preselected playlists and the target user can be determined.

For example, if the music features are the singer feature, the song feature, and the genre feature, for each preselected playlist, the correlation coefficients between the preselected playlist and the target user, in terms of the feature data of the singer feature, the feature data of the song feature, and the feature data of the genre feature, can be determined.

The correlation coefficients between the feature data of the same music features of the preselected playlists and the target user reflect the correlations between the same music features of the preselected catalysts and the target user. Optionally, the correlation between the feature data of the same music features of the preselected playlist and the target user may be determined by determining the Pearson correlation coefficients between the feature data of the same music features of the preselected playlists and the target user.

In step S130, candidate playlists from the plurality of preselected playlists is determined according to the correlation coefficients between the feature data of the same music features of each preselected playlist and the target user.

The candidate playlists are the playlists having higher correlations with the target user in terms of the same music features in the plurality of preselected playlists. After the correlation coefficients between the feature data of the same music features of the preselected playlists and the target user are obtained, for each preselected playlist, the playlists preferred by the target user in the preselected playlists can be determined by synthesizing the correlation coefficients of the feature data of all the same music features of the preselected playlists and the target user in the embodiments of the present application, so as to determine the playlists preferred by the target user in the plurality of preselected playlists to be the candidate playlists. The number of the determined candidate playlists is multiple, but less than the number of the plurality of preselected playlists.

In step S140, playlists constituting a playlist list is determined from the candidate playlists.

After the candidate playlists are obtained, playlists can also be selected from the candidate playlists to constitute a playlist list.

It can be seen that the correlations between the same music features of the preselected playlists and the target user may be obtained by determining the correlation coefficients between the feature data of the same music features of the preselected playlists and the target user in the embodiments of the present application, so as to determine playlists having higher correlations with the target users in terms of the same music features from the plurality of preselected playlists, and obtain the candidate playlists preferred by the target user. The playlists constituting the playlist list are determined from the candidate playlists preferred by the target user, so that the probability that the target user prefers the playlists in the playlist list is enhanced, and the probability that the target user clicks and listens to the playlist list determined by the embodiments of the present application, after being recommended to the target user, is enhanced, thereby providing a probability of improving the listening conversion rate of the playlist list. The playlist list determination method provided by the embodiments of the present application can make playlists in a playlist list have a relatively high correlation with a user to which a recommendation is made, thereby providing the probability of improving the listening conversion rate of the playlist list.

Optionally, the correlation coefficients between the feature data of the same music features of the preselected playlists and the target user may be Pearson correlation coefficients. Accordingly, the correlation coefficients between the feature data of each of the same music features of the preselected playlists and the target user may be determined as follows:

For each preselected playlist, the Pearson correlation coefficient between the feature data of each of the same music features of the preselected playlist and the target user is respectively determined according to the formula $P(U, P) = \frac{U * P}{\|U\|\|P\|}$.

Where, $P(U, P)$ is the Pearson correlation coefficient between the feature data of one of the same music features of the preselected playlist and the target user; $U$ is the feature data of a music feature preferred by the target user; $P$ is the feature data of a same music feature as $U$ in the preselected playlists; * indicates a multiplication sign; and $\| \|$ indicates a square root of a quadratic sum of each feature of the feature data therein.

For example, if $U$ indicates the feature data of the singer feature in the playlist (i.e., the feature vector of the singer feature in the playlist), the number of singers of each song in the playlist may be used as each feature of $U$. If the feature data of the singer feature may be a set of ((singer A, 2), (singer B, 1), (singer C, 2), etc.), then (singer A, 2), (singer B, 1), and (singer C, 2) may be considered as the features of $U$. Accordingly, $\|U\|$ may be considered to be a square root of a quadratic sum of each feature in the singer feature vector.

If the music features of the playlists are the singer feature, the song feature, and the genre feature, for each preselected playlist, the correlation coefficients between the feature data of the same music features of the preselected playlists and the target user may be determined in the way as follows:

In the embodiments of the present application, the Pearson correlation coefficient between the feature data of the singer feature of the preselected playlist and the target user may be determined according to the formula $P(U1, P1) = \frac{U1 * P1}{\|U1\|\|P1\|}$.

Where, $P(U1, P1)$ is a Pearson correlation coefficient between the singer feature of the preselected playlist and the target user; $U1$ is the feature data of a singer feature preferred by the target user; $P1$ is the feature data of the singer feature in the preselected playlist.

The Pearson correlation coefficients between the feature data of the song feature of the preselected playlist and the target user is determined according to the formula $P(U2, P2) = \frac{U2 * P2}{\|U2\|\|P2\|}$.

Where, $P(U2, P2)$ is the Pearson correlation coefficient between the feature data of the song feature of the preselected playlist and the target user; $U2$ is the feature data of a song feature preferred by the target user; $P2$ is the feature data of the song feature in the preselected playlist.

The Pearson correlation coefficient between the feature data of the genre feature of the preselected playlist and the target user is determined according to the formula $P(U3, P3) = \frac{U3 * P3}{\|U3\|\|P3\|}$.

Where, $P(U3, P3)$ is the Pearson correlation coefficient between the feature data of the genre feature of the preselected playlist and the target user; $U3$ is the feature data of a genre feature preferred by the target user; $P3$ is the feature data of the genre feature in the preselected playlist.

By means of the calculation of the formulas above, the Pearson correlation coefficients between the preselected list and the target user, in terms of the singer feature, the song feature, and the genre feature, can be obtained respectively.

Optionally, after the correlation coefficients between the feature data of the same music features of the preselected playlists and the target user are determined, the playlists preferred by the target user in the preselected playlists can be determined by synthesizing the correlation coefficients between the feature data of all the same music features of the preselected playlists and the target user, so as to obtain the candidate playlists. Accordingly, Fig. 2 shows a flow chart of a method for determining candidate playlists from the plurality of preselected playlists provided by an embodiment of the present application. Referring to Fig. 2, the method may also include step S200 to step S210.

In step S200, the preselected playlists is determined to be candidate playlists if the correlation coefficients between the feature data of all the same music features of the preselected playlists and the target user all satisfy a predetermined coefficient condition.

Optionally, the predetermined coefficient condition may be set coefficient values of high correlations between the same music features of the preselected playlists and the target user, and can be specifically set according to actual situations. If the correlation coefficients between the feature data of all the same music features of a certain preselected playlist and the target user all satisfy the predetermined coefficient condition, it can be determined that the preselected playlist has a high correlation with the target user and conforms to the preference of the target user, and the preselected playlist is determined to be a candidate playlist.

For example, if the music features of the playlists are the singer feature, the song feature, and the genre feature, in the case that all the correlation coefficients between the preselected playlists and the target user, in terms of the feature data of the singer feature, the feature data of the song feature, and the feature data of the genre feature satisfy the predetermined coefficient condition, the preselected playlists can be determined as the candidate playlists.

In step 210, the preselected playlists is determined to be preselected playlists to be judged if the correlation coefficients between the feature data of the same music features of the preselected playlist and the target user do not satisfy the predetermined coefficient condition, and judging whether the preselected playlists to be judged are the candidate playlists according to music portrait data of the target user.

If the music features of the playlists are the singer feature, the song feature, and the genre feature, the preselected playlists can be determined to be the preselected playlists to be judged as long as the correlation coefficient between the feature data of at least one of the singer feature, the song feature, and the genre feature of the preselected playlists and the target user does not satisfy the predetermined coefficient condition.

To further judge whether the target user prefers the preselected playlists to be judged, the music portrait data of the target user may be introduced. Optionally, in the embodiments of the present application, for the music features with correlation coefficients not satisfying the predetermined coefficient condition, whether the feature data of the music features in the preselected playlists matches the content of the music features indicated in the music portrait data of the target user can be determined, so as to determine whether the target user prefers the preselected playlists according to the matching result.

The music portrait data is representative of user portrait data in the field of music. The user portrait data may be considered as the tagging of user information. The user portrait data is obtained by collecting and analyzing data of main information such as user social attributes, living habits, and behaviors in a certain field, and then abstracting overview features of the user in the certain field. The user portrait data can help quickly finding a precise user group and implementing the matching of user requirements.

Accordingly, Fig. 3 shows a flow chart of a method for judging whether the preselected playlists are candidate playlists on the basis of the music portrait data provided by an embodiment of the present application. Referring to Fig. 3, the method may include step S300 to step S330.

In step S300, music features with correlation coefficients not satisfying the predetermined coefficient condition are determined.

The music features with correlation coefficients between the feature data of the preselected playlists to be judged and the target user not satisfying the predetermined coefficient condition are determined in the step S300. For example, if only the correlation coefficient between the feature data of the singer feature of the preselected playlists and the target user does not satisfies the predetermined coefficient condition, then the music feature determined in the step S300 is the singer feature.

In step S310, it is judged whether the feature data of the music features in the preselected playlists to be judged matches content of music features indicated in music portrait data of the target user; if yes, executing step S320; otherwise, executing step S330.

Optionally, the embodiments of the present application can directly verify whether the feature data of the music features in the preselected playlists to be judged exists in the content of the music features counted by the music portrait data; if not, mismatching is determined; and if yes, matching is determined.

In step S320, the preselected playlists is determined to be judged to be the candidate playlists.

In step S330, the preselected playlists to be judged is determined not to be the candidate playlists.

The method shown in Fig. 3 is only a processing mode in the case that the correlation coefficient between the feature data of any one of the same music features of the preselected playlists and the target user does not satisfy the predetermined coefficient condition. Regarding the preselected playlists to be judged, the embodiments of the present application can also calculate an average value of the correlation coefficients between the feature data of the music features of the preselected playlists to be judged and the target user, and determine whether the preselected playlists to be judged are playlists preferred by the target user according to the calculated average value. When the average value is greater than a preset average value, it can be determined that the preselected playlists to be judged are the playlists preferred by the target user; when the average value is less than the preset average value, it can be determined that the preselected playlists to be judged are not the playlists preferred by the target user. The preset average value may be set according to actual use situations.

Optionally, after the candidate playlists are determined, a predetermined number of playlists can further be randomly selected from the candidate playlists to constitute a playlist list.

Optionally, because although the candidate playlists determined according to the correlation coefficients between the feature data of the same music features of each preselected playlist and the target user are the playlists preferred by the target user, most of the candidate playlists focus on a certain music feature, if the playlist list is determined whereby and is recommended to the target user, the target user may listen to the same type of songs for a long time. As a result, the user experience in playlist diversity is reduced, bringing visual and auditory fatigues to the target user.

If the target user has diversiform music listening habits, i.e., may like different genres of music, such as pop music, rock music, and folk music, but the degrees of liking the pop music, the rock music, and the folk music are different, the embodiments of the present application can quantize the degrees of liking the pop music, the rock music, and the folk music of the target user according to the correlation coefficients between the feature data of the corresponding music features of each preselected playlist and the target user, i.e., represented by the values of the correlation coefficients between the music features in the playlist. Based on the results obtained by the calculation, the playlists having high correlation coefficients of same music feature are all determined to be the candidate playlists, and the same type of playlists aggregately exist in the playlist list determined by these candidate playlists.

For example, the first five playlists in a playlist list are pop music related playlists, the middle three are pop music related playlists, and the last four are folk music related playlists. If the playlist list is recommended to the target user only according to the sequence of the correlations between the playlists and the target user, because the first five playlists with the same type are recommended successively, visual and auditory fatigues may be brought to the target user. Therefore, when determining the playlists constituting the playlist list from the candidate playlists, the playlists having high correlations with the user and diverse types may be considered.

Fig. 4 shows a flow chart of a method for determining playlists constituting a playlist list from candidate playlists provided by an embodiment of the present application. Referring to Fig. 4, the method may include step S400 to step S420.

In step S400, the playlists and the target user are took as nodes, to separately establish connection relationships between the feature data of all the candidate playlists and the target user for each music feature, so as to obtain a maximum connected sub-graph reflecting correlations between the candidate playlists and the target user.

The maximum connected sub-graph may be considered as a sub-graph formed by connecting all the nodes in the figure with the fewest edges. The edges used for connecting the nodes in the embodiments of the present application may be considered as the correlations between the feature data of the candidate playlists and the target user. For example, if the music features of the playlists include the singer feature, the song feature, and the genre feature, then for the same music features of the playlists and the target user (which are the singer feature, the song feature, and the genre feature respectively), relationships may be established according to the correlations between the feature data of the same music features. After all the relationships are established, these relationships, taken as a whole, form a maximum connected sub-graph.

In step S410, connected playlists are determined from the maximum connected sub-graph for each music feature to obtain a playlist set of each music feature.

Fig. 5 shows a schematic diagram of sub-graphs of associations between playlists and a user. Cycles in the figure indicate playlists and triangles indicate users. In the maximum connected sub-graph, not all the nodes (including the playlists and the users) are connected, and the playlists corresponding to the connected nodes may be considered to have correlations, e.g., are all rock music playlists. The unconnected playlists are playlists having no association with each other, for example, one sub-graph is a rock music playlist and the other sub-graph is folk music playlist. By determining the connected playlists from the maximum connected sub-graph for each music feature, a playlist set of each music feature can be obtained, thereby ensuring the type diversity of the playlists. The nodes included in the playlist set are playlists, and the music features of the playlists in the playlist set are the same, and therefore, the playlists in the playlist set belong to the same type.

In step S420, playlists with correlation coefficients satisfying a predetermined recommendation condition are separately selected from the playlist set of each music feature to constitute a playlist list.

Optionally, playlists with correlation coefficients satisfying the predetermined recommendation condition in the playlist set may be considered as the playlists having the highest correlation coefficients in the playlist set. Optionally, playlists with correlation coefficients satisfying the predetermined recommendation condition may also be set according to actual situations.

After the playlists with correlation coefficients satisfying the predetermined recommendation condition are selected from the playlist set of each feature music, the playlists with multiple types and having high correlations with the target user can be obtained. The playlist list constituted by these playlists endows the playlists in the playlist list subsequently recommended to the target user with features of diversity and high correlations with the target user, thereby providing the probability of improving the listening conversion rate of the playlists.

Optionally, after the playlist list is obtained, the playlists in the playlist list are sorted in the embodiments of the present application. For example, an average value of the correlation coefficients between the feature data of each music feature of each playlist in the playlist list and the target user can be determined, so as to sort the playlists in the playlist list according to the average value, for example, the playlists in the playlist list are sorted according to the average value in a descending order.

Taking the music features of the playlists which include the singer feature, the song feature and the genre feature as an example, for each playlist in the playlist list, the embodiments of the present application can determine average values of the correlation coefficients between the feature data of the singer feature, the song feature, and the genre feature of the playlist and the target user, so as to sort the positions of the playlists in the playlist list according to the determined average values of the playlists.

Optionally, a plurality of preselected playlists can be determined from a playlist library according to a selection rule in the embodiments of the present application. For example, playlists with playlist name conforming to a predetermined playlist name writing rule, playlist description content conforming to a predetermined playlist description content writing rule, song-related number data in the playlists conforming to a predetermined number requirement, and song-related listening data in the playlists conforming to a predetermined listening requirement can be selected from the playlist library to obtain the plurality of preselected playlists.

Optionally, the playlist name may conform to the playlist name writing rule in the following conditions: the number of characters in the playlist name is greater than 5 but less than 20; the number of special symbols in the playlist name is less than 20% of the total number of the characters, and the special symbols include non-mainstream symbols, Martian language symbols, personalized symbols, etc.; there are no more than two blanks at the beginning of the playlist name, and there are not more than three blanks in all the characters of the playlist name; there is no punctuation, such as a comma, a period, an exclamation mark, and an interrogation mark at the beginning of the playlist name, and there are no more than three punctuations in all the characters of the playlist name.

The playlist description content may conform to the predetermined playlist description content writing rule in the following conditions: the total number of characters in the playlist description content is greater than 5; the number of special symbols in the playlist description content is less than 20% of the total number of the characters.

Optionally, the song-related number data in the playlist may be the number of songs, the number of albums, the number of singers, the number of languages, and the like in the playlist. The song-related number data in the playlist may conform to the predetermined number requirement in the following conditions: the number of songs is not less than 10; the number of albums is greater than 3, the number of songs belonging to the same album in the playlist is not more than 5; the number of singers is unlimited; and the number of languages of the songs in the playlist is less than 5.

Optionally, the song-related listening data in the playlist may be the listening ratio of the songs in the playlist, the full listening ratio of the playlist, the average number of persons listened to the playlist, etc., where the listening ratio of the songs in the playlist may be the total number of times of listening to the songs in the playlist/the total number of times of listening to all the songs in the playlist library; the full listening ratio of the playlist may be the average value of full listening ratios of the songs in the playlist; the full listening ratio of a song is the ratio of the sum of each play duration of the song to (play times * song duration); the average number of persons listened to the playlist is the average value of persons listened to each song in the playlist.

The song-related listening data in the playlist may conform to the predetermined listening requirement in the following conditions: the listening ratio of the songs in the playlist is greater than 90%, the full listening ratio of the playlist is greater than 65%, and the average number of persons listened to the playlist is greater than 3.

Preferably, Fig. 6 is another flow chart of a playlist list determination method provided by an embodiment of the present application. The method can be applied to an electronic equipment, such as a server providing a music playing service, an equipment having a data processing capability on the user side, or the like. Referring to Fig. 6, the method may include steps S500 to step S590.

In step S500, playlists with playlist name conforming to a predetermined playlist name writing rule, playlist description content conforming to a predetermined playlist description content writing rule, song-related number data in the playlists conforming to a predetermined number requirement, and song-related listening data in the playlists conforming to a predetermined listening requirement are selected from a playlist library, to obtain a plurality of preselected playlists.

In step S510, feature data of music features of each predetermined playlist and feature data of music features preferred by a target user are determined, where one playlist has at least one music feature.

In step S520: Pearson correlation coefficients between the feature data of each of the same music features of the preselected playlist and the target user are determined respectively according to a formula

$$P(U, P) = \frac{U * P}{\|U\|\|P\|}$$

Where, $P(U, P)$ is the Pearson correlation coefficient between the feature data of one of the same music feature of the preselected playlist and the target user; $U$ is the feature data of a music feature preferred by the target user; $P$ is the feature data of the same music feature as $U$ in the preselected playlist.

In step S530, the preselected playlists are determined to be candidate playlists if the correlation coefficients between the feature data of all the same music features of the preselected playlists and the target user all satisfy a predetermined coefficient condition.

In step S540, the preselected playlists are determined to be preselected playlists to be judged if the correlation coefficient between the feature data of any one of the same music features of the preselected playlist and the target user does not satisfy the predetermined coefficient condition; determining music features with correlation coefficients not satisfying the predetermined coefficient condition; judging whether the feature data of the music features in the preselected playlists to be judged matches content of music features indicated in a music portrait data of the target user; if yes, determining the preselected playlists to be judged to be the candidate playlists; and if not, determining the preselected playlists to be judged not to be the candidate playlists.

In step S550, the playlists and the target user are took as nodes to separately establish connection relationships between the feature data of all the candidate playlists and the target user for each music feature, so as to obtain a maximum connected sub-graph reflecting correlations between the candidate playlists and the target user.

In step S560, connected playlists are determined from the maximum connected sub-graph for each music feature to obtain a playlist set of each music feature.

In step S570, playlists with correlation coefficients satisfying a predetermined recommendation condition are selected from the playlist set of each music feature respectively to form a predetermined number of playlists, so as to constitute a playlist list.

**In** step S580, an average value of the correlation coefficients between the feature data of each music feature of each playlist in the playlist list and the target user are determined.

**In** step S590, the playlists in the playlist list are sorted according to the average value.

After the playlists in the playlist list are determined and sorted, the playlist list can be recommended to the target user. Because the recommended playlist list has a relatively high correlation with the target user, the probability of improving the listening conversion rates of the playlists is provided.

The playlist list determination device provided by the embodiments of the present application is introduced below. The playlist list determination device described below may correspond and refer to the playlist list determination method described above.

Fig. 7 is a structure block diagram of a playlist list determination device provided by an embodiment of the present application. The device can be applied to an electronic equipment, such as a server providing a music playing service, an equipment having a data processing capability on the user side, or the like. Referring to Fig. 7, the device may include:

a preselected playlist determination module 100, configured to determine a plurality of preselected playlists;
a feature data determination module 200, configured to determine feature data of music features of each predetermined playlist and feature data of music features preferred by a target user, where one playlist has at least one music feature;
a correlation coefficient determination module 300, configured to determine, for each preselected playlist, a correlation coefficient between the feature data of each of the same music features of the preselected playlist and the target user;
a candidate playlist determination module 400, configured to determine candidate playlists from the plurality of preselected playlists according to the correlation coefficients between the feature data of the same music features of the preselected playlist and the target user; and
a playlist list determination module 500, configured to determine playlists constituting a playlist list from the candidate playlists.

Optionally, Fig. 8 shows an optional structure of the correlation coefficient determination module 300 provided by an embodiment of the present application. Referring to Fig. 8, the correlation coefficient determination module 300 may include:

a Pearson correlation coefficient determination unit 310, configured to determine Pearson correlation coefficients between the feature data of each of the same music features of the preselected playlist and the target user respectively according to the formula

$$P(U, P) = \frac{U * P}{\|U\|\|P\|};$$

Where, $P(U, P)$ is the Pearson correlation coefficient between the feature data of the same music features of the preselected playlists and the target user; $U$ is the feature data of a music feature preferred by the target user; $P$ is the feature data of the same music feature as $U$ in the preselected playlists; * indicates a multiplication sign; and ‖ ‖ indicates a square root of a quadratic sum of each feature of the feature data therein.

Optionally, Fig. 9 shows an optional structure of the candidate playlist determination module 400 provided by an embodiment of the present application. Referring to Fig. 9, the candidate playlist determination module 400 may include:

a first determination unit 410, configured to determine preselected playlists to be candidate playlists if the correlation coefficients between the feature data of all the same music features of the preselected playlists and the target user all satisfy a predetermined coefficient condition; and
a judgment unit 420, configured to determine the preselected playlists to be preselected playlists to be judged if the correlation coefficient between the feature data of any one of the same music features of the preselected playlist and the target user does not satisfy the predetermined coefficient condition, and judging whether the preselected playlists to be judged are the candidate playlists according to music portrait data of the target user.

Optionally, Fig. 10 shows an optional structure of the judgment unit 420 provided by an embodiment of the present application. Referring to Fig. 10, the judgment unit 420 may include:

a music feature determination subunit 421, configured to determine music features with correlation coefficients not satisfying the predetermined coefficient condition;
a matching judgment subunit 422, configured to judge whether the feature data of the music features determined by the music feature determination subunit 421 matches the content of the music features indicated in the user portrait data of the target user;
a first result determination subunit 423, configured to determine the candidate playlists to be judged to be the candidate playlists if the judgment result of the matching judgment subunit 422 is yes; and
a second result determination subunit 424, configured to determine the candidate playlists to be judged not to be the candidate playlists if the judgment result of the matching judgment subunit 422 is not.

Optionally, the playlist list determination module 500 may be specifically configured to select a predetermined number of playlists from the candidate lists to constitute a playlist list.

Optionally, in the embodiments of the present application, the playlist list determination module 500 can determine the playlists constituting the playlist list from the candidate playlists in combination with the diversity of the playlists. Accordingly, Fig. 11 shows an optional structure of the playlist list determination module 500 provided by an embodiment of the present application. Referring to Fig. 11, the playlist list determination module 500 may include:

a sub-graph establishment unit 510, configured to take the playlists and the target user as nodes, separately establish connected relationships between the feature data of all the candidate playlists and the target user for each music feature, to obtain a maximum connected sub-graph reflecting correlations between the candidate playlists and the target user;
a playlist set determination unit 520, configured to determine connected playlists from the maximum connected sub-graph for each music feature to obtain a playlist set of each music feature; and
a playlist selection unit 530, configured to select playlists with correlation coefficients satisfying a predetermined recommendation condition from the playlist set of each music feature respectively to form a predetermined number of playlists, so as to constitute the playlist list.

Optionally, Fig. 12 shows another structure of the playlist list determination device provided by an embodiment of the present application. As shown in Fig. 7 and Fig. 12, the device may further include:

an average value determination module 600, configured to determine an average value of the correlation coefficients between the feature data of each music features of each playlist in the playlist list and the target user; and
a sort module 700, configured to sort the playlists in the playlist list according to the average value.

Optionally, the preselected playlist determination module 100 may determine a plurality of preselected playlists from a playlist library according to a preset selection rule. For example, the preselected playlist determination module 100 may be used to select playlists with playlist name conforming to a predetermined playlist name writing rule, playlist description content conforming to a predetermined playlist description content writing rule, song-related number data in the playlists conforming to a predetermined number requirement, and song-related listening data in the playlists conforming to a predetermined listening requirement from the playlist library to obtain the plurality of preselected playlists.

There further provides in an embodiment of the present application an electronic equipment. The electronic equipment may include the playlist list determination device.

The playlists in the playlist list is determined by adopting the electronic equipment provided by the embodiments of the present application, allowing the determined playlist lists have a relatively high correlation with the target user, and the probability of improving the listening conversion rates of the playlists is provided.

Fig. 13 is a block diagram of a hardware structure of an electronic equipment provided by an embodiment of the present application. The electronic equipment may be a server, an equipment on the user side, or the like. Referring to Fig. 13, the electronic equipment may include: a processor 1, a communication interface 2, a memory 3, and a communication bus 4;
where the processor 1, the communication interface 2, and the memory 3 communicate with each other by means of the communication bus 4.

Optionally, the communication interface 2 may be an interface of a communication module, such as an interface of a GSM module, an interface of a CDMA module, and an interface of an LTE module;
the processor 1 is configured to execute a program;
the memory 3 is configured to store the program; and
the program may include a program code that comprises computer operating instructions.

The processor 1 may be a Central Processing Unit (CPU) or an Application Specific Integrated Circuit (ASIC), and is configured to be one or more integrated circuits for implementing the embodiments of the present application.

The memory 3 may include a high-speed RAM memory, and may also further include a non-volatile memory, such as at least one disk memory.

The program may be specifically configured to:

determine feature data of music features included in preselected playlists and feature data of music features preferred by a target user, where the music features included in the preselected playlists correspond to the music features preferred by the target user;
calculate correlation coefficients between the feature data of the music features included in the preselected playlists and the feature data of the corresponding music features preferred by the target user; and
determine the preselected playlists to be candidate playlists when the correlation coefficients between the feature data of the music features included in the preselected playlists and the feature data of the corresponding music features preferred by the target user satisfy a preset condition.

The embodiments of the present description are described in a progressive manner, and each embodiment focuses on illustrating differences from one another. Mutual references may be made to the same or similar portions among these embodiments. The device disclosed in the embodiments corresponds to the method disclosed in the embodiments, and therefore is described relatively simply. For related ports, reference may be made to the method description.

A person skilled in the art can further understand that the individual exemplary units and arithmetic steps that are described in conjunction with the embodiments disclosed herein are able to be implemented in the electronic hardware, the computer software or a combination thereof. For describing the interchangeability between the hardware and the software clearly, the components and the steps of each example have been described according to the function generally in the description above. Whether these functions are implemented in hardware or software is determined by the specific applications and design constraint conditions of the technical solution. For each specific application, the described functions can be implemented by a person skilled in the art using different methods, but this implementation should not be considered to go beyond the scope of the present application.

The steps of the method or the algorithm that are described in conjunction with the embodiments disclosed herein can be implemented in the hardware, the software module executed by the processor, or the combination thereof. The software module can be built in a Random Access Memory (RAM), the memory, a Read-Only Memory (ROM), an electrically programmable ROM, an electrically erasable programmable ROM, a register, hardware, a movable disk, a CD-ROM, or a storage medium in any other form that is well-known in the technical field.

The above description of the disclosed embodiments enables a person skilled in the art to implement or use the present application. Multiple modifications made to those embodiments are obvious to a person skilled in the art, and the ordinal principles defined therein can be implemented in other embodiments without departing from the spirit or the scope of the present application. Therefore, the present application will not be limited to those embodiments illustrated herein, but should be in coincidence with the widest scope that complies with the principles and the novel features disclosed therein.

## Claims

**1.** A playlist list determination method, comprising:

determining feature data of music features comprised in preselected playlists and feature data of music features preferred by a target user, wherein the music features comprised in the preselected playlists correspond to the music features preferred by the target user;
calculating correlation coefficients between the feature data of the music features comprised in the preselected playlists and the feature data of corresponding music features preferred by the target user; and
determining the preselected playlists to be candidate playlists when the correlation coefficients between the feature data of the music features comprised in the preselected playlists and the feature data of the corresponding music features preferred by the target user satisfy a preset condition.

**2.** The playlist list determination method according to claim 1, wherein the correlation coefficients are Pearson correlation coefficients; the calculating the correlation coefficients between the feature data of the music features comprised in the preselected playlists and the feature data of the corresponding music features preferred by the target user comprises:

determining the Pearson correlation coefficients between the feature data of the music features comprised in the preselected playlists and the feature data of the corresponding music features preferred by the target user according to the formula $P(U, P) = \frac{U * P}{\|U\|\|P\|}$;

wherein $P(U, P)$ is the Pearson correlation coefficient between the feature data of the music features in the preselected playlists and the feature data of the corresponding music features preferred by the target user; $U$ is the feature data of a music feature preferred by the target user; $P$ is the feature data of a music feature corresponding to $U$ in the preselected playlists; * indicates a multiplication sign; and $\| \|$ indicates a square root of a quadratic sum of each feature of the feature data therein.

**3.** The playlist list determination method according to claim 2, wherein the determining the preselected playlists to be candidate playlists when the correlation coefficients between the feature data of the music features comprised in the preselected playlists and the feature data of the corresponding music features preferred by the target user satisfy a preset condition comprises:
determining the preselected playlists to be candidate playlists if the correlation coefficients between the feature data of all the same music features in the preselected playlists and preferred by the target user all satisfy a predetermined coefficient condition.

**4.** The playlist list determination method according to claim 3, further comprising:
determining the preselected playlists to be preselected playlists to be judged if the correlation coefficients between the feature data of any one of the same music features in the preselected playlist and preferred by the target user do not satisfy the predetermined coefficient condition, and judging whether the preselected playlists to be judged are the candidate playlists according to music portrait data of the target user.

**5.** The playlist list determination method according to claim 4, wherein the judging whether the preselected playlists to be judged are the candidate playlists according to the music portrait data of the target user comprises:

determining music features with correlation coefficients not satisfying the predetermined coefficient condition;
judging whether the feature data of the music features in the preselected playlists to be judged matches content of the music features indicated in the music portrait data of the target user;
if the feature data of the music features in the preselected playlists to be judged matches the content of the music features indicated in the music portrait data of the target user, determining the preselected playlists to be judged to be the candidate playlists; and
if the feature data of the music features in the preselected playlists to be judged does not match the content of the music features indicated in the music portrait data of the target user, determining the preselected playlists to be judged not to be the candidate playlists.

**6.** The playlist list determination method according to any one of claims 1-5, further comprising:
selecting a predetermined number of playlists from the candidate playlists to constitute a playlist list.

**7.** The playlist list determination method according to any one of claims 1-4, wherein the determining the playlists constituting the playlist list from the candidate playlists comprises:

taking a plurality of candidate playlists and the target user as nodes, separately establishing connection relationships between the feature data of all the candidate playlists and the target user for each music feature, to obtain a maximum connected sub-graph of correlations between the candidate playlists and the target user;
determining connected playlists from the maximum connected sub-graph for each music feature to obtain a playlist set of each music feature; and
separately selecting playlists with correlation coefficients satisfying a predetermined recommendation condition from the playlist set of each music feature to form a predetermined number of playlists, so as to constitute the playlist list.

**8.** The playlist list determination method according to claim 1, further comprising:

determining an average value of the correlation coefficients between the feature data of the music features of each candidate playlist in the playlist list and the target user; and
sorting the candidate playlists in the playlist list according to the average value.

**9.** A playlist list determination device, comprising one or more processors and a storage medium in which operating instructions are stored; when the operating instructions in the storage medium are run, the processor executes the following steps:

determining feature data of music features comprised in preselected playlists and feature data of music features preferred by a target user, wherein the music features comprised in the preselected playlists correspond to the music features preferred by the target user;
calculating correlation coefficients between the feature data of the music features comprised in the preselected playlists and the feature data of corresponding music features preferred by the target user; and
determining the preselected playlists to be candidate playlists when the correlation coefficients between the feature data of the music features comprised in the preselected playlists and the feature data of the corresponding music features preferred by the target user satisfy a preset condition.

**10.** The playlist list determination device according to claim 9, wherein when the correlation coefficients are Pearson correlation coefficients, the processor executes the following step:

determining the Pearson correlation coefficients between the feature data of the music features comprised in the preselected playlists and the feature data of the corresponding music features preferred by the target user according to the formula $P(U, P) = \frac{U * P}{\|U\|\|P\|}$;

wherein $P(U, P)$ is the Pearson correlation coefficient between the feature data of one of the same music features in the preselected playlists and preferred by the target user; $U$ is the feature data of a music feature preferred by the target user; $P$ is the feature data of a music feature corresponding to $U$ in the preselected playlists; * indicates a multiplication sign; and $\| \|$ indicates a square root of a quadratic sum of each feature of the feature data therein.

**11.** The playlist list determination device according to claim 10, wherein the processor further executes the following step:

determining the preselected playlists to be candidate playlists if the correlation coefficients between the feature data of all the same music features in the preselected playlists and preferred by the target user all satisfy a predetermined coefficient condition.

**12.** The playlist list determination device according to claim 11, wherein the processor further executes the following step:

determining the preselected playlists to be preselected playlists to be judged if the correlation coefficients between the feature data of any one of the same music features in the preselected playlist and preferred by the target user do not satisfy the predetermined coefficient condition, and judging whether the preselected playlists to be judged are the candidate playlists according to music portrait data of the target user.

**13.** The playlist list determination device according to any one of claims 9-12, wherein the processor further executes the following steps:

determining music features with correlation coefficients not satisfying the predetermined coefficient condition;
judging whether the feature data of the music features in the preselected playlists to be judged matches content of the music features indicated in the music portrait data of the target user;
if the feature data of the music features in the preselected playlists to be judged matches the content of the music features indicated in the music portrait data of the target user, determining the preselected playlists to be judged to be the candidate playlists; and
if the feature data of the music features in the preselected playlists to be judged does not match the content of the music features indicated in the music portrait data of the target user, determining the preselected playlists to be judged not to be the candidate playlists.

**14.** An electronic equipment, comprising the playlist list determination device according to any one of claims 9-13.

**15.** A non-transitory computer readable storage medium having computer executable instructions stored thereon, wherein when these executable instructions are run in a computer, the following steps are executed:

determining feature data of music features comprised in preselected playlists and feature data of music features preferred by a target user, wherein the music features comprised in the preselected playlists correspond to the music features preferred by the target user;
calculating correlation coefficients between the feature data of the music features comprised in the preselected playlists and the feature data of corresponding music features preferred by the target user; and
determining the preselected playlists to be candidate playlists when the correlation coefficients between the feature data of the music features comprised in the preselected playlists and the feature data of the corresponding music features preferred by the target user satisfy a preset condition.

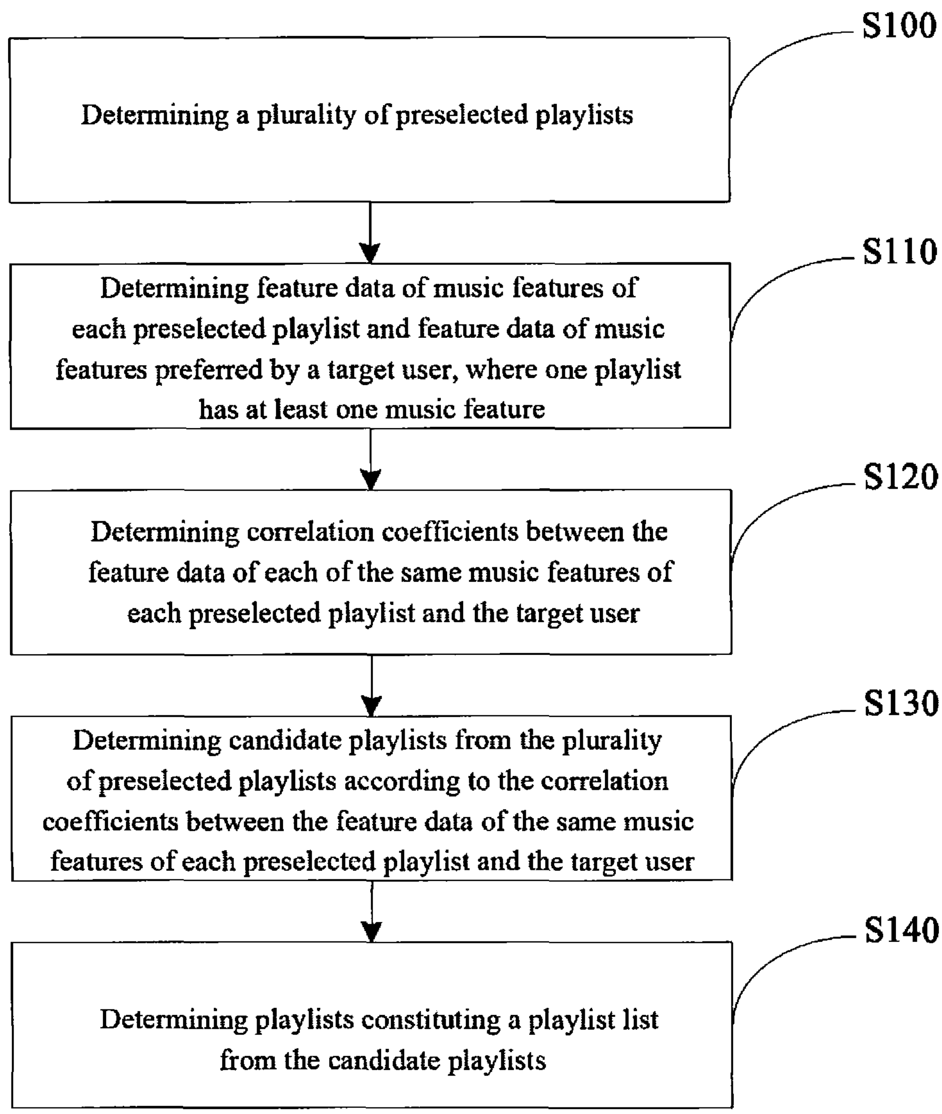
S100
Determining a plurality of preselected playlists
S110
Determining feature data of music features of each preselected playlist and feature data of music features preferred by a target user, where one playlist has at least one music feature
S120
Determining correlation coefficients between the feature data of each of the same music features of each preselected playlist and the target user
S130
Determining candidate playlists from the plurality of preselected playlists according to the correlation coefficients between the feature data of the same music features of each preselected playlist and the target user
S140
Determining playlists constituting a playlist list from the candidate playlists

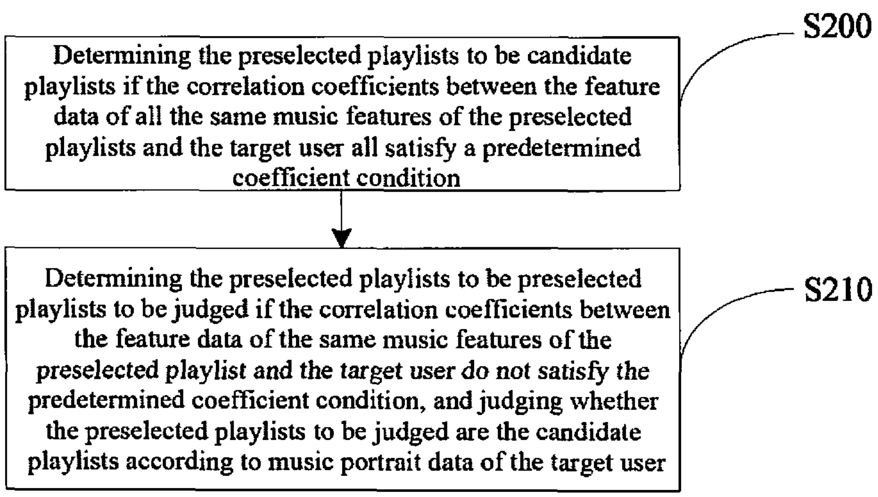
S200
Determining the preselected playlists to be candidate playlists if the correlation coefficients between the feature data of all the same music features of the preselected playlists and the target user all satisfy a predetermined coefficient condition
S210
Determining the preselected playlists to be preselected playlists to be judged if the correlation coefficients between the feature data of the same music features of the preselected playlist and the target user do not satisfy the predetermined coefficient condition, and judging whether the preselected playlists to be judged are the candidate playlists according to music portrait data of the target user

FIG.2

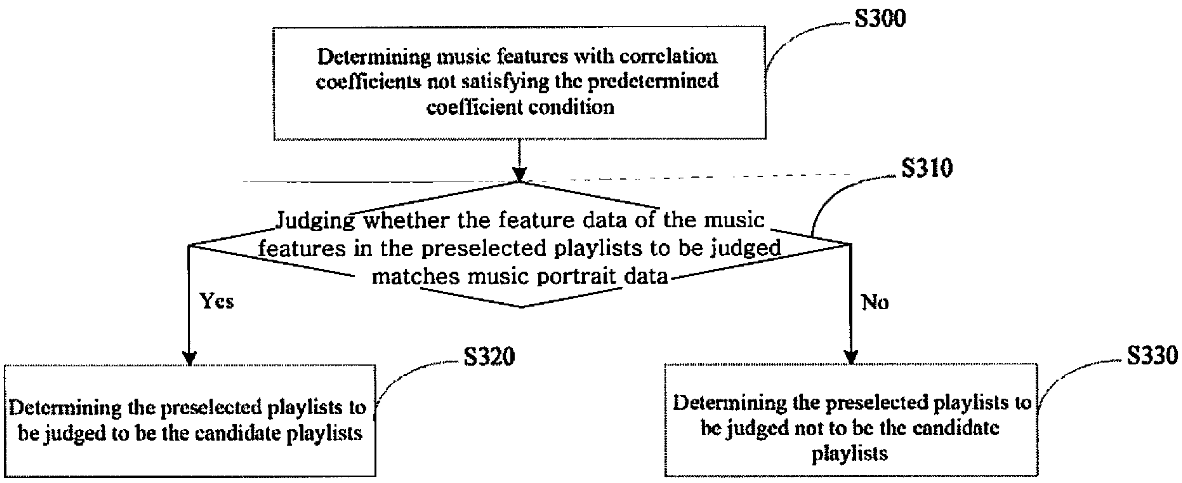


FIG.3

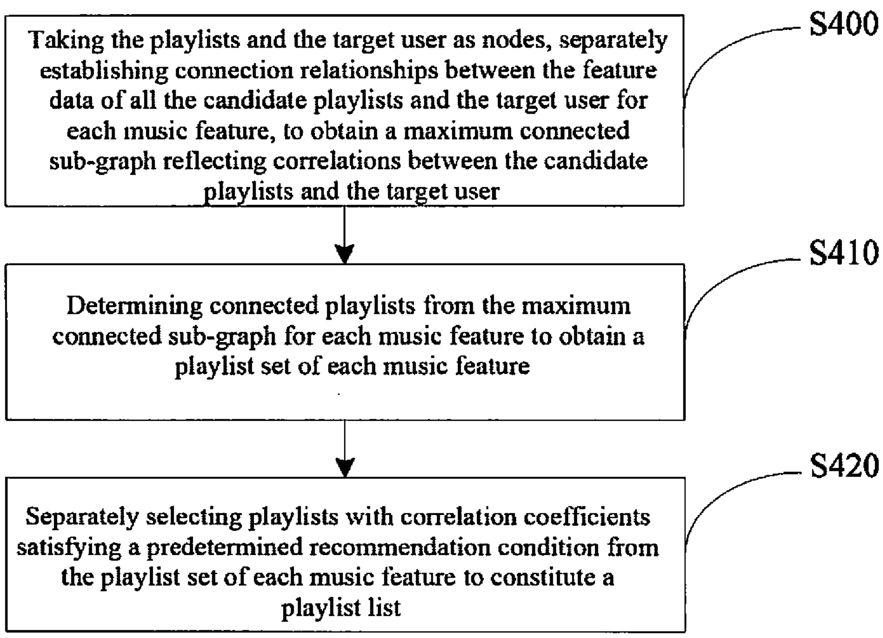


FIG.4

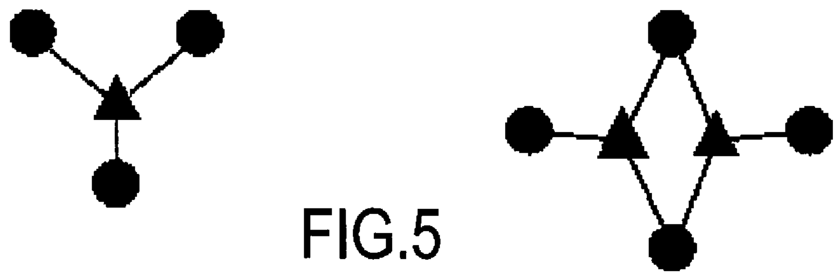

FIG.5

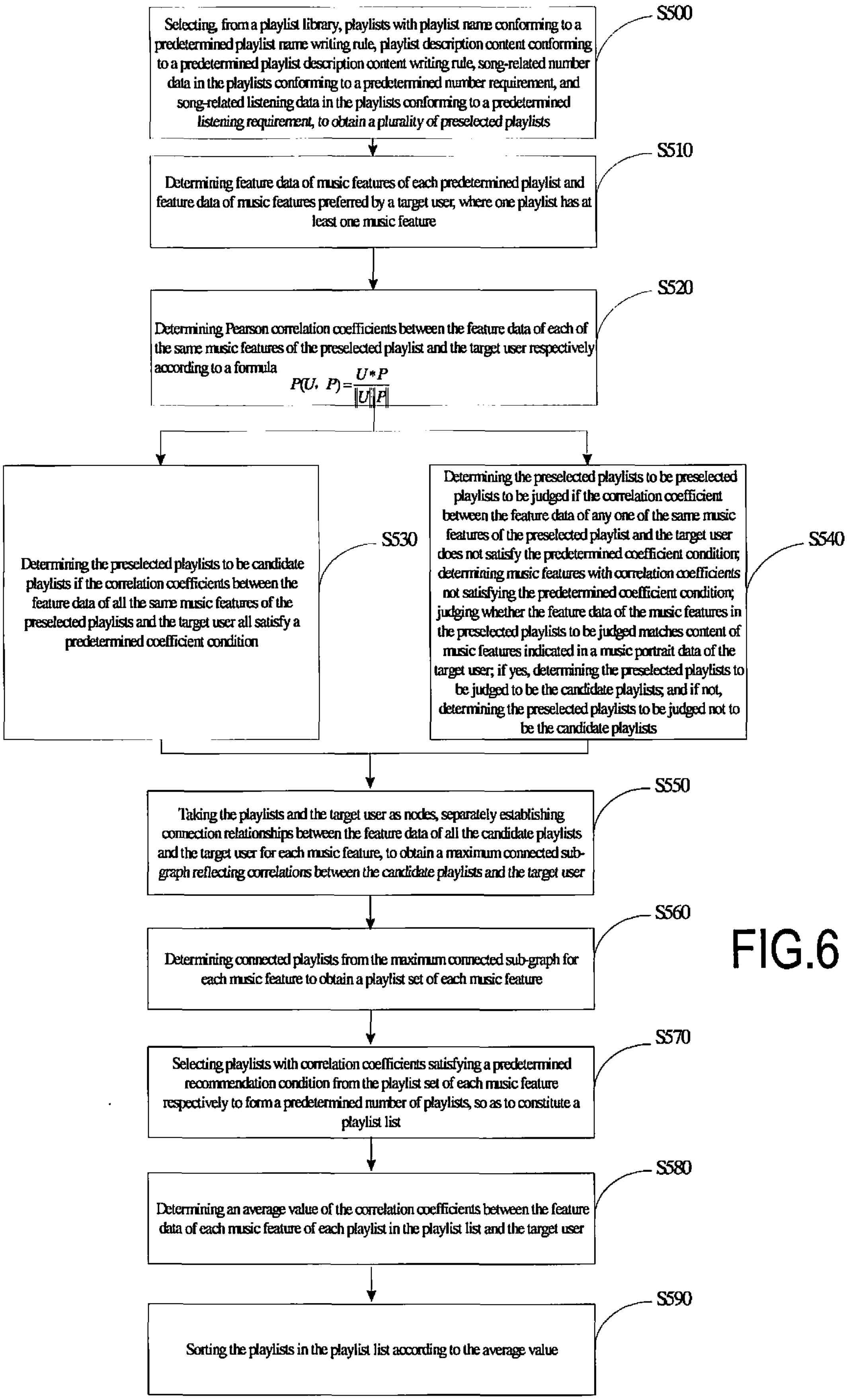
S500
Selecting, from a playlist library, playlists with playlist name conforming to a predetermined playlist name writing rule, playlist description content conforming to a predetermined playlist description content writing rule, song-related number data in the playlists conforming to a predetermined number requirement, and song-related listening data in the playlists conforming to a predetermined listening requirement, to obtain a plurality of preselected playlists
S510
Determining feature data of music features of each predetermined playlist and feature data of music features preferred by a target user, where one playlist has at least one music feature
S520
Determining Pearson correlation coefficients between the feature data of each of the same music features of the preselected playlist and the target user respectively according to a formula
$P(U, P)=\frac{U*P}{\|U\|P\|}$
S530
Determining the preselected playlists to be candidate playlists if the correlation coefficients between the feature data of all the same music features of the preselected playlists and the target user all satisfy a predetermined coefficient condition
S540
Determining the preselected playlists to be preselected playlists to be judged if the correlation coefficient between the feature data of any one of the same music features of the preselected playlist and the target user does not satisfy the predetermined coefficient condition; determining music features with correlation coefficients not satisfying the predetermined coefficient condition; judging whether the feature data of the music features in the preselected playlists to be judged matches content of music features indicated in a music portrait data of the target user; if yes, determining the preselected playlists to be judged to be the candidate playlists; and if not, determining the preselected playlists to be judged not to be the candidate playlists
S550
Taking the playlists and the target user as nodes, separately establishing connection relationships between the feature data of all the candidate playlists and the target user for each music feature, to obtain a maximum connected sub-graph reflecting correlations between the candidate playlists and the target user
S560
Determining connected playlists from the maximum connected sub-graph for each music feature to obtain a playlist set of each music feature
S570
Selecting playlists with correlation coefficients satisfying a predetermined recommendation condition from the playlist set of each music feature respectively to form a predetermined number of playlists, so as to constitute a playlist list
S580
Determining an average value of the correlation coefficients between the feature data of each music feature of each playlist in the playlist list and the target user
S590
Sorting the playlists in the playlist list according to the average value

FIG.6

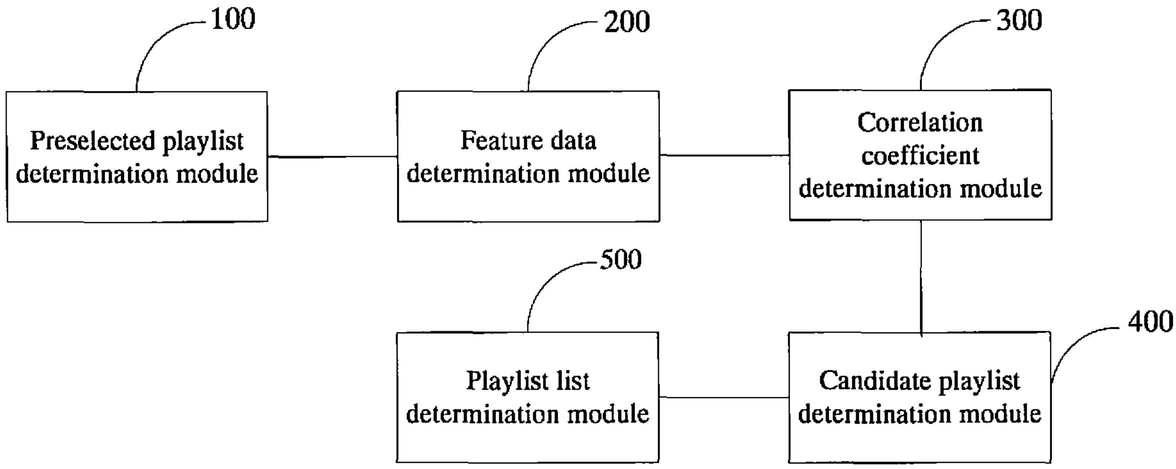


FIG.7

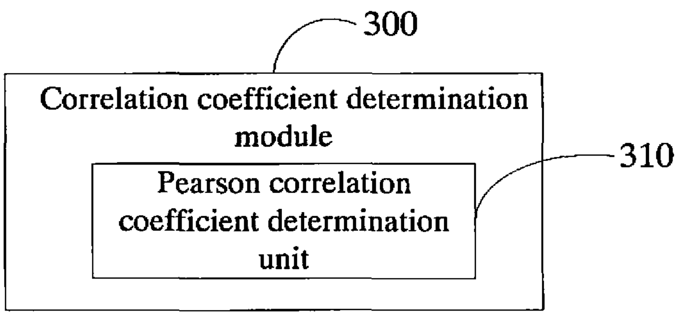


FIG.8

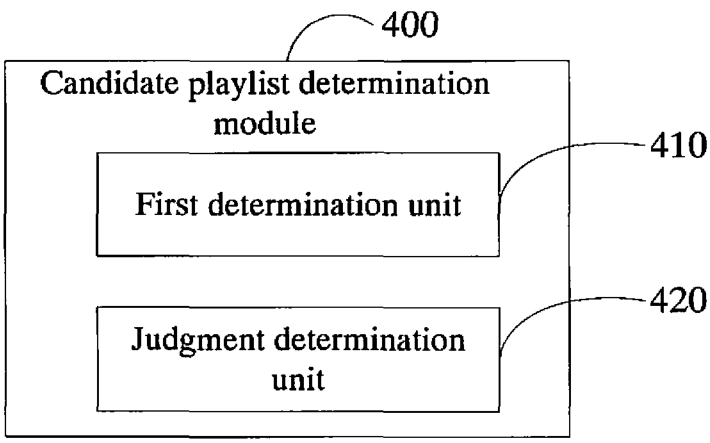


FIG.9

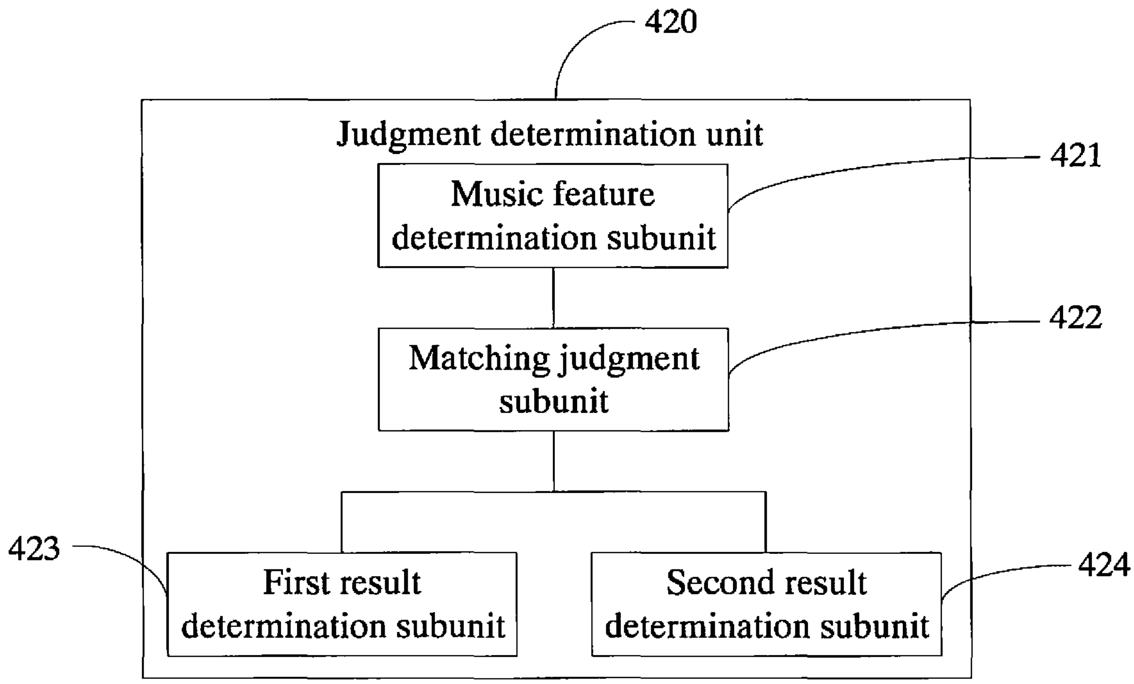
420
Judgment determination unit
Music feature determination subunit
421
Matching judgment subunit
422
423
First result determination subunit
Second result determination subunit
424

FIG.10

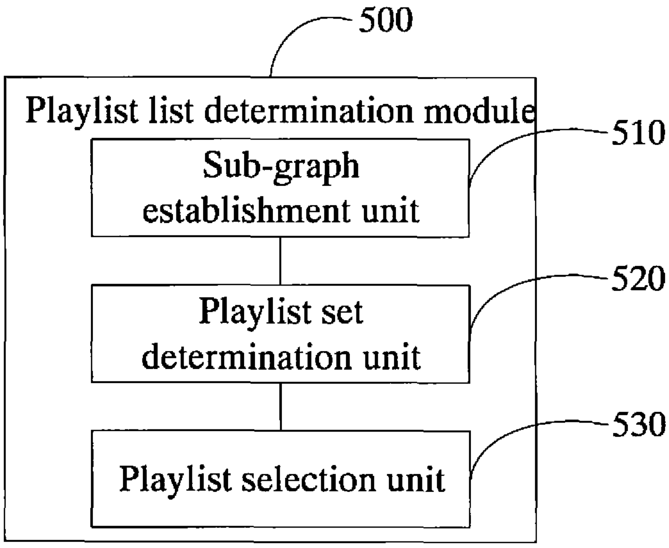
500
Playlist list determination module
Sub-graph establishment unit
510
Playlist set determination unit
520
Playlist selection unit
530

FIG.11

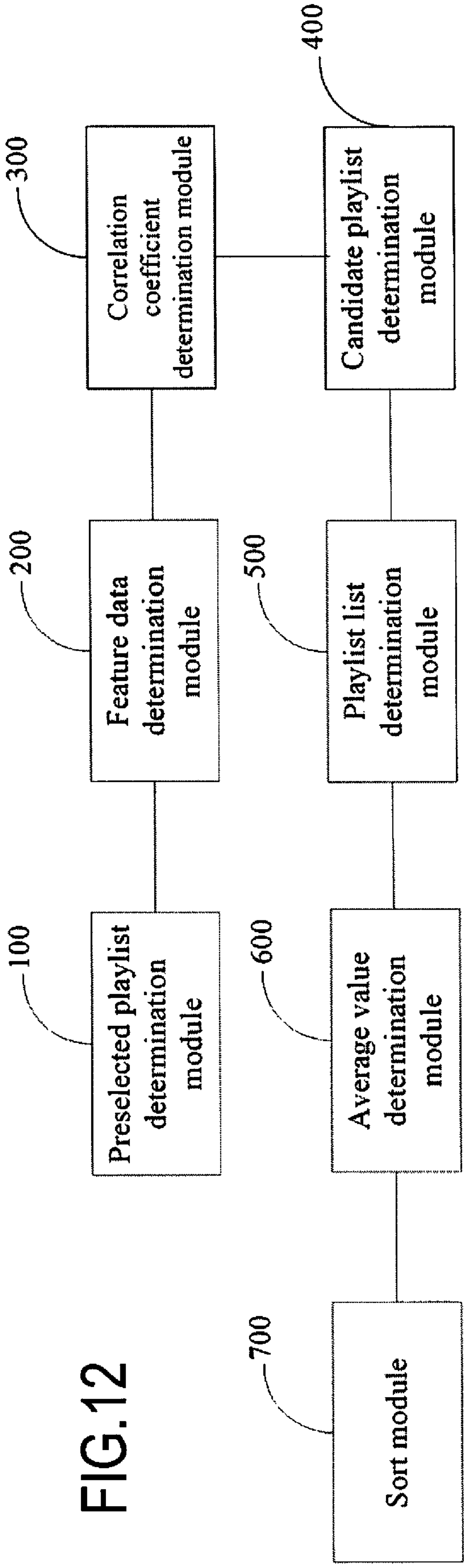
Correlation coefficient determination module
300
Candidate playlist determination module
400
Feature data determination module
200
Playlist list determination module
500
Preselected playlist determination module
100
Average value determination module
600
Sort module
700

FIG.12

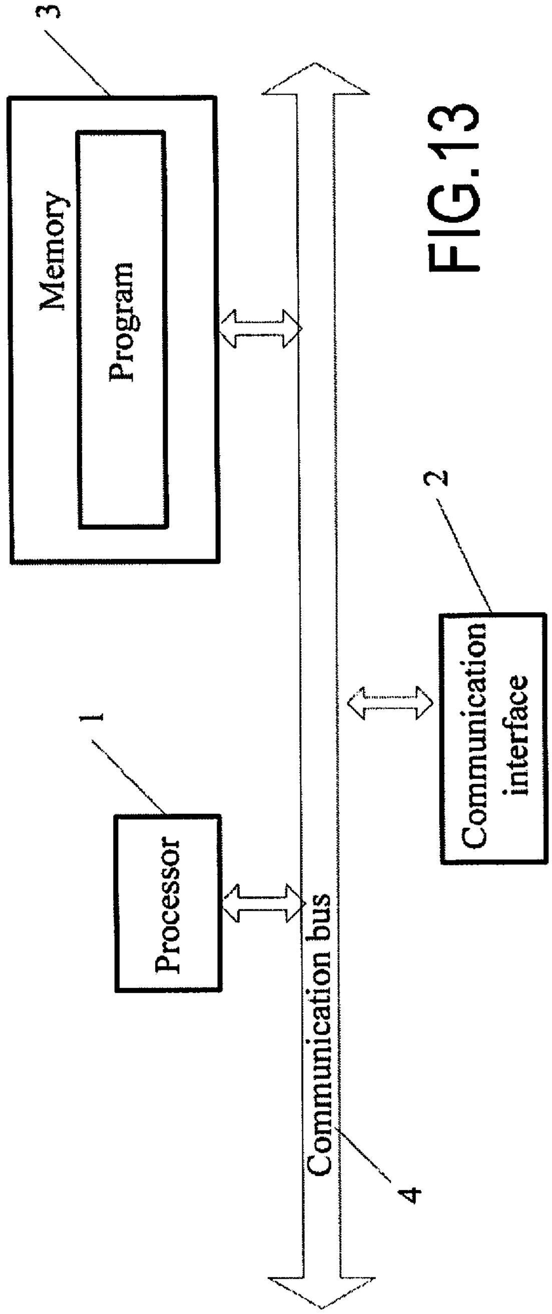
3
Memory
Program
2
Communication interface
1
Processor
Communication bus
4

FIG.13

# INTERNATIONAL SEARCH REPORT

International application No.
**PCT/CN2016/082203**

**A. CLASSIFICATION OF SUBJECT MATTER**

G06F 17/30 (2006.01) i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC, IEEE: recommend, playlist, track, preference, like, choose, elect, song, music, custom, habit

**C. DOCUMENTS CONSIDERED TO BE RELEVANT**

| Category* | Citation of document, with indication, where appropriate, of the relevant passages | Relevant to claim No. |
|---|---|---|
| X | CN 102004785 A (BEIJING RUIXIN ONLINE SYSTEM TECHNOLOGY CO., LTD.), 06 April 2011 (06.04.2011), claim 1 | 1, 6-9, 13-15 |
| A | CN 102402625 A (SHENZHEN WUJU TECHNOLOGY CO., LTD.), 04 April 2012 (04.04.2012), the whole document | 1-15 |
| A | CN 103793537 A (NANJING UNIVERSITY), 14 May 2014 (14.05.2014), the whole document | 1-15 |
| A | US 2011288929 A1 (MICROSOFT CORPORATION), 24 November 2011 (24.11.2011), the whole document | 1-15 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 01 August 2016 (01.08.2016) | **22 August 2016 (22.08.2016)** |

| Name and mailing address of the ISA/CN: | Authorized officer |
|---|---|
| State Intellectual Property Office of the P. R. China<br>No. 6, Xitucheng Road, Jimenqiao<br>Haidian District, Beijing 100088, China<br>Facsimile No.: (86-10) 62019451 | **LI, Dong**<br>Telephone No.: (86-10) **62414436** |

Form PCT/ISA/210 (second sheet) (July 2009)

**INTERNATIONAL SEARCH REPORT**
Information on patent family members

International application No.
**PCT/CN2016/082203**

| Patent Documents referred in the Report | Publication Date | Patent Family | Publication Date |
|---|---|---|---|
| CN 102004785 A | 06 April 2011 | US 2012136814 A1 | 31 May 2012 |
| CN 102402625 A | 04 April 2012 | None | |
| CN 103793537 A | 14 May 2014 | None | |
| US 2011288929 A1 | 24 November 2011 | None | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 201510688392X